# EUROPÄISCHE PATENTSCHRIFT

(11) **EP 1 663 434 B1**
(45) Veröffentlichungstag und Bekanntmachung des Hinweises auf die Patenterteilung: **29.07.2009**
(21) Anmeldenummer: 04765081.7
(22) Anmeldetag: 10.09.2004
(51) Int. Cl.: B01D 3/00, B01D 53/18, B01J 8/06

(54) **ROHRBÜNDELREAKTOR MIT MEHRPHASEN-FLÜSSIGKEITSVERTEILER**
BUNDLED-TUBE REACTOR COMPRISING A MULTI-PHASE FLUID DISTRIBUTOR
REACTEUR A FAISCEAU TUBULAIRE A DISTRIBUTEUR DE FLUIDES MULTIPHASE

(30) Priorität: 10.09.2003 DE 10341896
(43) Veröffentlichungstag der Anmeldung: 07.06.2006
(73) Patentinhaber: Uhde GmbH, 44141 Dortmund (DE); Evonik Degussa GmbH, 45128 Essen (DE)
(72) Erfinder: PORSCHA, Peter, 65779 Kelkheim (DE)
(86) Internationale Anmeldenummer: PCT/EP2004/010156
(87) Internationale Veröffentlichungsnummer: WO 2005/025716

(56) Entgegenhaltungen:
- DE-A- 2 919 462
- US-A- 4 102 778
- US-A- 5 882 610
- US-A1- 2001 055 548

## Beschreibung

Die Erfindung betrifft einen Flüssigkeitsverteiler für 2 gleichmäßig zu verteilende, flüssige Phasen in eine Vielzahl von Rohren eines aufrecht stehenden Rohrbündelreaktors. Derartige Rohrbündelreaktoren dienen zur Durchführung chemischer Reaktionen, die entweder stark exotherm oder endotherm ablaufen und bei denen ein bestimmtes Temperaturintervall eingehalten werden muss. Während die chemische Reaktion im Innenraum der Rohre, welche z.B. mit Schüttungen gefüllt sind, abläuft, werden die Rohre auf der Außenseite temperiert, d.h. entweder gekühlt oder beheizt. Die Rohre werden üblicherweise ober- und unterseitig durch Rohrböden gehalten und dadurch gegenüber dem Rohraußenraum abgeschlossen bzw. abgedichtet. Ferner weisen übliche Rohrbündelreaktoren einen Außenmantel auf sowie Öffnungen für Zu- und Ableitungen sowie für Montagezwecke. Der Außenmantel begrenzt üblicherweise auch den Verteilerraum oberhalb des Rohrbodens nach außen.

Schwierigkeiten bereitet in solchen Reaktoren die gleichmäßige Eindosierung der Reaktanden, insbesondere wenn es sich um zwei nicht miteinander mischbare Flüssigkeiten handelt, die wegen ihrer Nicht-Mischbarkeit nicht vorgemischt werden können und daher getrennt voneinander in die einzelnen Rohre des Rohrbündels eingebracht werden müssen, beispielsweise also eine wässrige und eine ölige Phase. Ferner entstehen Schwierigkeiten auch dann, wenn es sich bei einer der beiden Flüssigkeiten oder bei beiden um jeweils kleine Durchsatzmengen handelt und die Ablaufstellen deswegen anfällig für Grenzflächeneffekte der Flüssigkeiten sind, z.B. Strahlablenkung, und des weiteren die erforderlichen kleinen Ablauföffnungen durch Schmutzpartikel verstopft werden können.

Eine weitere Schwierigkeit besteht in Fällen, wo außer den beiden Flüssigkeiten noch ein Gasstrom in die einzelnen Rohre des Rohrbündels eingeleitet werden soll, sei es als weiteres Reaktionsmedium oder als Strippmedium für Reaktionsprodukte oder zum Ausspülen unerwünschter Nebenprodukte. Eine solche Schwierigkeit tritt regelmäßig dann auf, wenn die Rohrbündelreaktoren Schüttungen enthalten, etwa Katalysatorschüttungen oder Trägermaterial für biologische Prozesse, und eine Betriebsweise als Rieselbettreaktor vorgesehen ist.

Schwierigkeiten der oben genannten Art können sich auch gegenseitig verstärken, wenn sich Gasströmung und Flüssigkeitstropfen oder feine Flüssigkeitsstrahlen gegenseitig beeinflussen, etwa Flüssigkeit verweht wird.

Eine weitere Schwierigkeit kann dann entstehen, wenn wechselnde Betriebsbedingungen auftreten. Dies ist dann der Fall, wenn zyklische Regeneration von Katalysatormaterial oder ein Ausspülen von biologischem Material erforderlich ist und der Verteiler während der Regeneration auch Mengenströme bewältigen muss, die von denen im normalen Betrieb deutlich verschieden sind.

Die Aufgabe der Erfindung ist daher, ein Verteilersystem für 2 gleichmäßig zu verteilende, flüssige Phasen in eine Vielzahl von Rohren eines aufrecht stehenden Rohrbündelreaktors zur Durchführung chemischer oder biologischer Reaktionen zur Verfügung zu stellen, mit dem die oben beschriebenen Schwierigkeiten bewältigt werden können.

Die Erfindung löst die Aufgabe durch einen Rohrbündelreaktor umfassend einen Flüssigkeitsverteiler für 2 gleichmäßig zu verteilende, flüssige Phasen in eine Vielzahl von Rohren des aufrecht stehenden Rohrbündelreaktors zur Durchführung chemischer Reaktionen, die Rohre ober- und unterseitig durch Rohrböden gehalten und gegenüber dem Rohraußenraum abgeschlossen sind und, oberhalb des oberen Rohrbodens ein Verteilerraum angeordnet ist, der Zuführungen für zwei verschiedene Flüssigkeiten und mindestens eine Gasphase enthält, und
- direkt oberhalb des Rohrbodens oder darauf ein erstes Flüssigkeitsverteilungssystem angeordnet ist,
   - welches mit mindestens einer äußeren Zuführungseinrichtung verbunden ist und ein außerhalb des Rohrspiegels gelegenes, beispielsweise ringförmiges Wehr mit untenliegenden Öffnungen und eine Vielzahl von Einlauftüllen enthält,
   - wobei jedem der Rohre des Rohrbündels eine Einlauftülle oberseitig zugeordnet ist, die Einlauftüllen rohrförmig ausgebildet und vertikal ausgerichtet sind und je mindestens eine seitliche und eine weitere, oberhalb des Rohrbodens gelegene Öffnung größeren Querschnitts aufweisen sowie zum jeweils zugeordneten Rohr des Rohrbündels unterseitig hin offen sind, und
- oberhalb des ersten Flüssigkeitsverteilungssystems ein zweites Flüssigkeitsverteilungssystem angeordnet ist,
   - welches mit mindestens einer anderen äußeren Zuführungseinrichtung verbunden ist und einen oberen und einen unteren Verteilerboden enthält,
   - wobei der untere Verteilerboden eine Vielzahl von Öffnungen enthält, die fluchtend oberhalb der Einlauftüllen des ersten Flüssigkeitsverteilungssystems angeordnet sind sowie mindestens eine Einrichtung zur Einstellung einer gleichmäßigen Flüssigkeitshöhe über den Öffnungen aufweist,
   - wobei der obere Verteilerboden mit der Zuführungseinrichtung für Flüssigkeit verbunden ist und eine Vielzahl von Überlaufwehren oder Bodenbohrungen enthält, aus denen die Flüssigkeit in den unteren Verteilerboden ablaufen kann und jedes der Überlaufwehre einer Vielzahl von Öffnungen des unteren Verteilerbodens zugeordnet ist.

Die Funktionsweise ist hierbei folgende: Die erste Flüssigkeit wird von außen in den Verteilerraum eingeführt, dies kann z.B. seitlich durch einen Ringverteiler üblicher Bauart oder anderweitig erfolgen. Die Turbulenz dieser Einlaufströmung wird durch das ringförmige Wehr gebrochen, so dass nur eine ruhige, im wesentlichen gleichförmige oder laminare Strömung durch die unterhalb des Flüssigkeitsspiegels befindlichen Öffnungen des Wehrs in den Bereich der Einlauftüllen gelangt. Durch die seitlichen Öffnungen der Einlauftüllen gelangt die erste Flüssigkeit in das Rohrinnere und läuft an der Rohrinnenwand herunter bis in die in den Rohren etwa befindliche Rieselbett-Schüttung. Die Ausprägung der Öffnungen definiert hierbei ebenso wie die einstellbare Flüssigkeitshöhe den Durchsatz durch die Öffnungen.

Die zweite Flüssigkeit wird, beispielsweise von oben, auf einen als Vorverteiler wirkenden oberen Verteilerboden aufgebracht, über dessen Überlaufwehre oder Bodenbohrungen die zweite Flüssigkeit auf einen als Feinverteiler wirkenden und z.B. als Lochverteiler ausgeführten unteren Verteilerboden läuft. Durch die Öffnungen des Lochverteilers rinnt die zweite Flüssigkeit von oben in die Einlauftüllen herunter, trifft sie im Idealfall mittig und fällt direkt weiter auf die in den Rohren befindliche Rieselbett-Schüttung, wo der Kontakt mit der ersten Flüssigkeit erfolgt. Wie im ersten Verteilungssystem definiert die Ausprägung der Öffnungen hierbei ebenso wie die einstellbare Flüssigkeitshöhe den Durchsatz durch die Öffnungen.

Das zuzuführende Gas kann an einer beliebigen Stelle oberhalb des Flüssigkeitsspiegels des ersten Verteilungssystems eingeleitet werden und tritt über die obere Öffnung der Einlauftüllen in den Rieselbettraum ein.

Im Falle von Spülvorgängen, etwa im Zusammenhang mit einer Regeneration der Schüttung, kann die obere Öffnung, die einen größeren Querschnitt als die untere Öffnung aufweist, dazu genutzt werden, deutlich größere Durchsatzmengen in die Schüttung einzubringen.

Sofern in den Flüssigkeiten partikelförmige Verunreinigungen mitgeführt werden, die die Öffnungen der Einlauftüllen oder des Lochbodens zusetzen könnten, bewirkt die Höhe der seitlichen Öffnungen der Einlauftüllen als auch die Höhe der Überlaufwehre des oberen Verteilerbodens, dass sich größere Partikel am jeweiligen Boden in den Ruhezonen der jeweiligen Flüssigkeitsströmung ansammeln können, ohne in die Öffnungen mitgerissen zu werden, was ein Vorteil der Erfindung ist.

In Ausgestaltungen der Erfindung weisen die Einlauftüllen mindestens eine tiefer gelegene, kleinere seitliche Bohrung und mindestens eine höher gelegene, größere seitliche Bohrung auf. Durch die tiefer gelegene, kleinere Bohrung wird eine definierte Öffnung für die zu verteilende Flüssigkeit geschaffen. Die höher gelegene, größere Bohrung dient dem Eintrag von Spülflüssigkeit. Sie sollte deutlich oberhalb des vorgesehenen Flüssigkeitsspiegels des Rohrbodens angebracht sein.

Statt Bohrungen können die Öffnungen auch als Einkerbungen ausgeführt werden, wie sie z.B. in der DE 29 19 462 A1, Fig. 1 und Fig. 1A, für gestreckte Verteilerbauformen vorgesehen worden sind. Die Einkerbungen können sowohl als gerade Schlitze als auch keilförmig ausgeführt werden. Auch können in den Einkerbungen der Einlauftüllen drahtförmige Rinnhilfen angebracht werden, an denen die Flüssigkeit auf der Innenseite der Einlauftüllen herabrinnen kann.

In weiteren Ausgestaltungen der Erfindung kann vorgesehen werden, dass das obere Flüssigkeitsverteilungssystem auf den Einlauftüllen des unteren Flüssigkeitsverteilungssystems aufliegt. Hierdurch kann eine besonders stabile Bauweise erreicht werden, auch vereinfacht sich die Aufgabe der exakten waagerechten Ausrichtung des unteren Verteilerbodens gegenüber einer freitragenden Konstruktion erheblich, was ein Vorteil der Erfindung ist.

Vorteilhafterweise wird der Flüssigkeitsverteiler zerlegbar und modular aufgebaut, z.B. wabenförmig oder segmentförmig, wenn der Rohrspiegel des Rohrbündels eine Dreiecksteilung aufweist. Besonders vorteilhaft kann eine modulare Bauweise dann verwirklicht werden, wenn alle Verteilungssysteme aufeinander aufliegen. Idealerweise sind die einzelnen Teile steckbar.

In einer weiteren Ausgestaltung der Erfindung weisen die Überlaufwehre des oberen Verteilerbodens des zweiten Flüssigkeitsverteilungssystems an ihrer Oberkante oder Unterkante oder beiden eine gezackte Form auf.

In weiteren Ausgestaltungen der Erfindung wird der untere Verteilerboden an seinen Öffnungen mit Ablaufhilfen, beispielsweise ringförmigen Nuten, versehen, damit ein seitliches Verlaufen aufgrund von Oberflächenspannung vermieden wird. Der untere Verteilerboden kann auch, in Anlehnung an die Fig. 4 der DE-OS 22 12 816 mit Überlaufwehren ausgestattet werden, die jeweils 3 um 120 Grad versetzte Abläufe aufweisen, welche jeweils fluchtend je einer Einlauftülle zugeordnet sind. Wie auch die eingekerbten Einlauftüllen können sie mit Ablaufhilfen, etwa aus Drähten, versehen sein.

In weiteren Ausgestaltungen der Erfindung sind die Einlauftüllen mit dem Rohrboden und den Rohren formschlüssig verbunden. Dies kann dadurch geschehen, dass die Einlauftüllen in die Rohrenden eingewalzt werden. Die Einlauftüllen können auch in eine separate Wanne eingeschraubt werden. Statt der Einlauftüllen können auch Steckhülsen oder andere Aufnahmevorrichtungen an den Rohrenden angebracht werden, um eine steckbare Vorrichtung zu schaffen.

Die Erfindung wird nachfolgend anhand von zehn Skizzen näher erläutert, wobei die erfindungsgemäßen Vorrichtungen aber nicht auf diese beispielhaften Ausführungsformen beschränkt sind.
- Fig. 1a: zeigt einen Längsschnitt durch eine mit einer Bohrung versehene Einlauf- tülle,
- Fig. 1b: zeigt einen Querschnitt durch eine mit einer radialen Bohrung versehenen Einlauftülle,
- Fig. 1c: zeigt einen Querschnitt durch eine mit einer tangentialen Bohrung versehe- nen Einlauftülle,
- Fig. 1d: zeigt einen Längsschnitt durch eine mit einer Bohrung versehene Einlauf- tülle, welche mit einem Gewinde ausgestattet ist,
- Fig. 2: zeigt eine Ausschnittskizze des mit Flüssigkeit beaufschlagten Verteilers im Betrieb,
- Fig. 3: zeigt einen Schnitt durch eine Verteilerkonstruktion mit einer Verteilerwan- ne,
- Fig. 4: zeigt einen weiteren Schnitt durch die in Fig. 3 gezeigte Verteilerkonstrukti- on zusammen mit einem Vorverteiler,
- Fig. 5: zeigt in einen weiteren Schnitt durch die in Fig. 3 gezeigte Verteilerkon- struktion die Möglichkeit der Segmentierung,
- Fig. 6: zeigt eine Ansicht der Segmentierung der Fig. 5 in der Aufsicht,
- Fig. 7: zeigt einen Längsschnitt durch ein mit einer Bohrung versehenen Verteiler- boden mit einer eingelassenen Ringnut um die Bohrung.

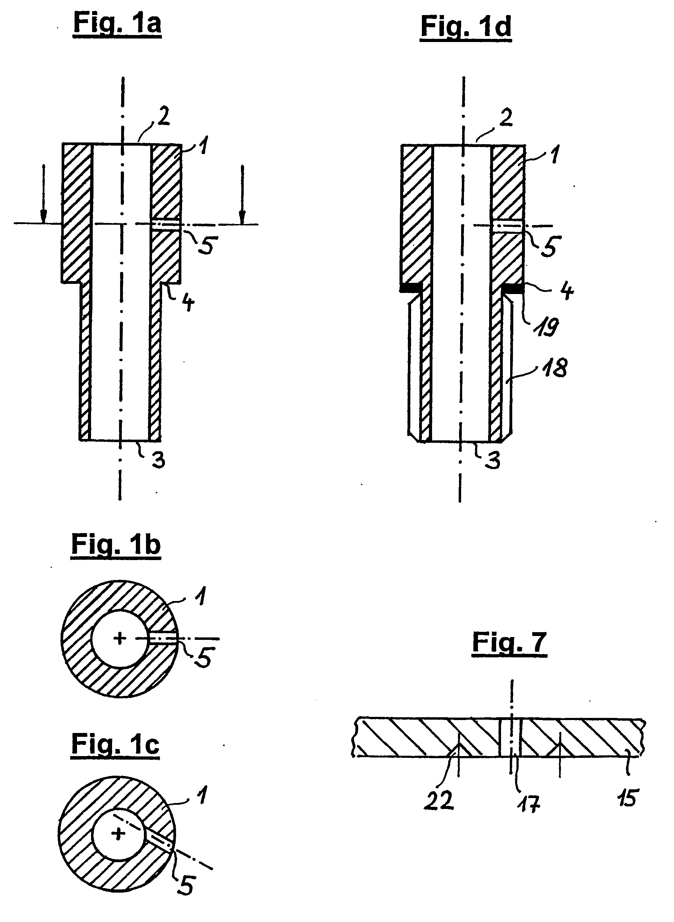

Fig. 1a zeigt einen Längsschnitt einer Einlauftülle 1 mit einer oberen Öffnung 2, einer unteren Öffnung 3, einem Absatz 4, der zur Aufnahme der Einlauftülle 1 in den Rohrboden dient und die Bohrung 5, durch die die zu verteilende Flüssigkeit in die Einlauftülle gelangen soll. Anstatt einer, wie in Fig. 1a gezeigt, können auch eine Vielzahl von Bohrungen über den Umfang verteilt zum Einsatz kommen. Die Bohrungen können dabei auch in verschiedener Höhe liegen und verschiedene Durchmesser aufweisen, das Bohrungsmuster sollte aber bei allen Einlauftüllen dasselbe sein.

Fig. 1b und Fig. 1c zeigen den in Fig. 1a durch Pfeile bezeichneten Querschnitt der Einlauftülle 1. Die Bohrung 5 in Fig. 1b ist hierbei in radialer Richtung ausgeführt, während die Bohrung 5 in Fig. 1c in tangentialer Richtung, vom Innendurchmesser aus gesehen, ausgeführt ist. Die letztere Ausführungsform wird vorteilhaft dann verwendet, wenn mehrere, über den Umfang verteilte Bohrungen zum Einsatz kommen stollen.

Fig. 1d zeigt einen Längsschnitt einer Einlauftülle 1 mit einer oberen Öffnung 2, einer unteren Öffnung 3, einem Absatz 4, der zur Aufnahme der Einlauftülle 1 mit Gewinde 18 zum Einschrauben in eine Verteilerwanne dient und die Bohrung 5, durch die die zu verteilende Flüssigkeit in die Einlauftülle gelangen soll. Der Absatz 4 wird in diesem Fall mit einer Dichtung 19 versehen.

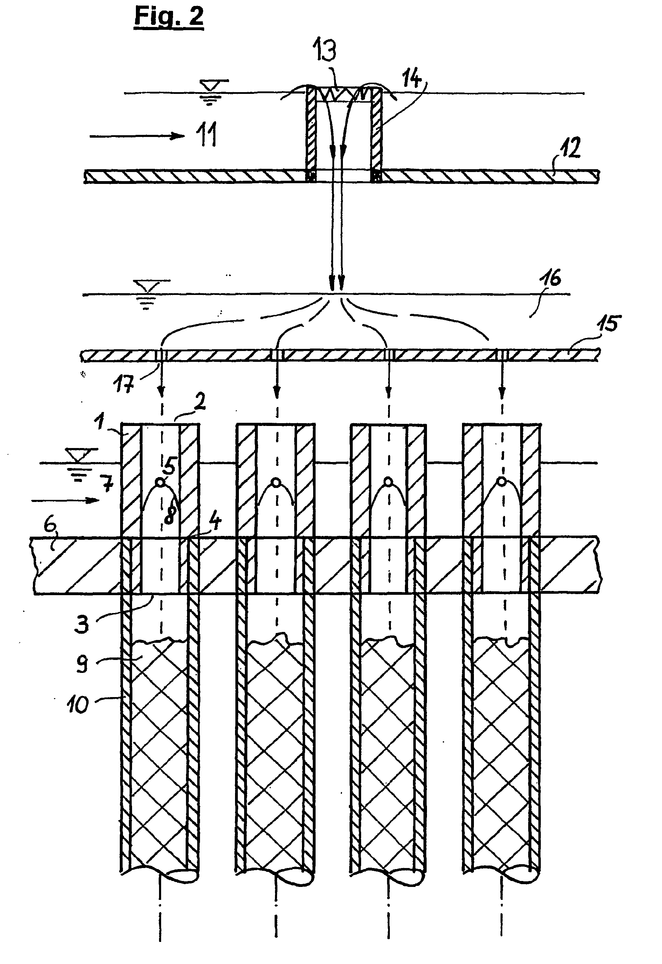

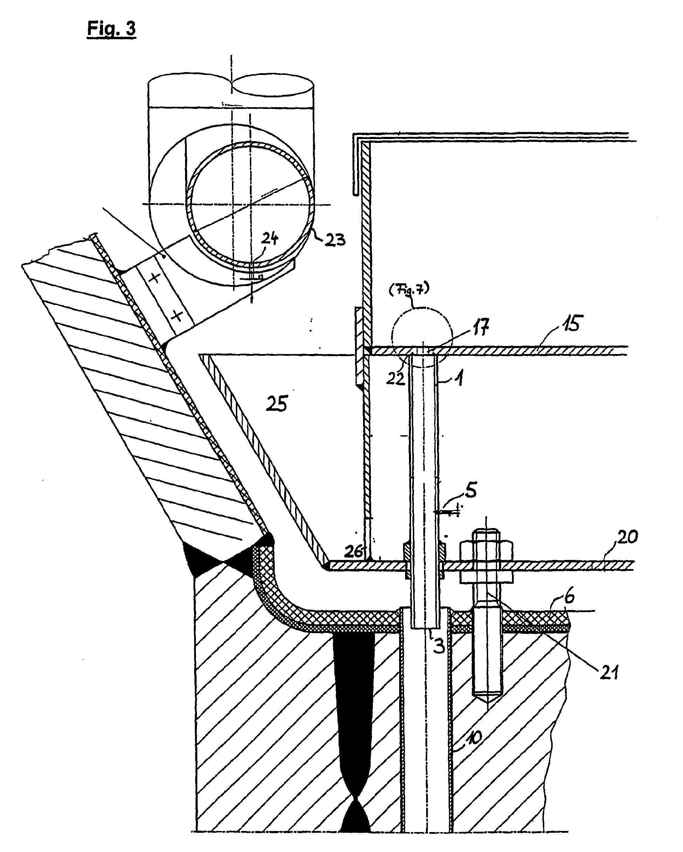

Fig. 2 zeigt die Einlauftülle 1 mit der oberen Öffnung 2, der unteren Öffnung 3, dem Absatz 4, der zur Aufnahme der Einlauftülle 1 in den Rohrboden 6 (oder der Verteilerwanne 20, siehe Fig. 3) dient und die Bohrung 5, durch die die zu verteilende erste Flüssigkeit 7 in die Einlauftülle 1 gelangen soll. Die Flüssigkeit 7 läuft durch die Bohrung 5 und rinnt, einen Auslaufkegel 8 bildend, an der Innenwand der Einlauftülle 1 durch Schwerkraft nach unten und gelangt auf die Schüttung 9 in den Rohren 10. Zur besseren Veranschaulichung sind noch drei weitere Einlauftüllen (ohne Ziffern) gezeigt, deren Funktion und Aufbau identisch sind, praktisch können auch mehrere Tausend Einlauftüllen in einem Verteiler zum Einsatz kommen.

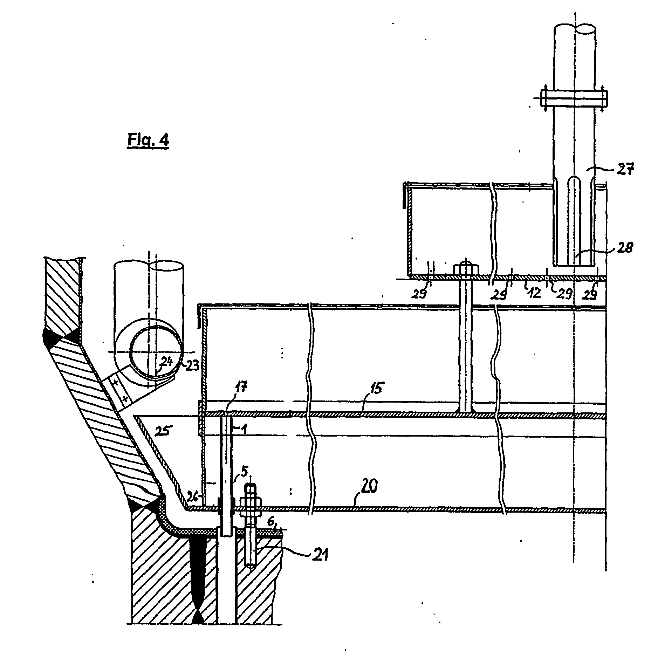

Die zweite zu verteilende Flüssigkeit 11 auf dem Vorverteilerboden 12 läuft über die gezackte Oberkante 13 des Überlaufwehres 14 (oder die Siebbodenlöcher 29, siehe Fig. 4) und gelangt auf den gelochten Feinverteiler 15, wo sie eine Flüssigkeitsschicht 16 definierter Höhe bildet. Durch die Bohrungen 17 und die oberen Öffnungen 2 der Einlauftüllen 1 fällt die zweite Flüssigkeit 11 direkt auf die Schüttung 9, was durch Pfeile angedeutet ist.

Fig. 3 zeigt eine Verteilerkonstruktion, bei der eine Verteilerwanne 20, die mit Schraubenbolzen 21 auf dem Verteilerboden 6 befestigt ist, zum Einsatz kommt. Die im Feinverteiler 15 zu verteilende Flüssigkeit gelangt durch die Bohrungen 17 direkt in die Einlauftüllen 1, auf denen der Feinverteiler 15 direkt aufliegt. Ein Freiraum oberhalb der Einlauftüllen 1, wie in Fig. 2 gezeigt, ist hier nicht vorgesehen. Um ein Verlaufen der aus den Bohrungen 17 ablaufenden Flüssigkeit in seitlicher Richtung, hervorgerufen durch Adhäsionskräfte auf der Unterseite des Feinverteilers 15, zu verhindern, ist um jede der Bohrungen 17 eine Ringnut 22 mit keilförmigem Querschnitt eingelassen, wie auch in Fig. 7 einzeln dargestellt.

Die von der Verteilerwanne 20 zu verteilende Flüssigkeit, die der Flüssigkeit 7 in Fig. 2 entspricht, gelangt vom Ringverteiler 23 über Bohrungen 24 in den Wanneneinlaufbereich 25 und läuft durch die Öffnungen 26 in den Bereich, wo sich die Einlauftüllen 1 mit den Bohrungen 5 befinden und gelangt durch die Bohrungen 5 und die unteren Öffnungen 3 in das Innere der Rohre 10.

Fig. 4 zeigt ebenfalls die in Fig. 3 dargestellte Konstruktion, wobei ein Vorverteilerboden 12 die aus einem Flüssigkeitsanschluss 27 über die Austrittsschlitze 28 gelangende Flüssigkeit über eine Vielzahl von Bohrungen 29 auf den gelochten Feinverteiler 15 gleichmäßig ablaufen lässt.

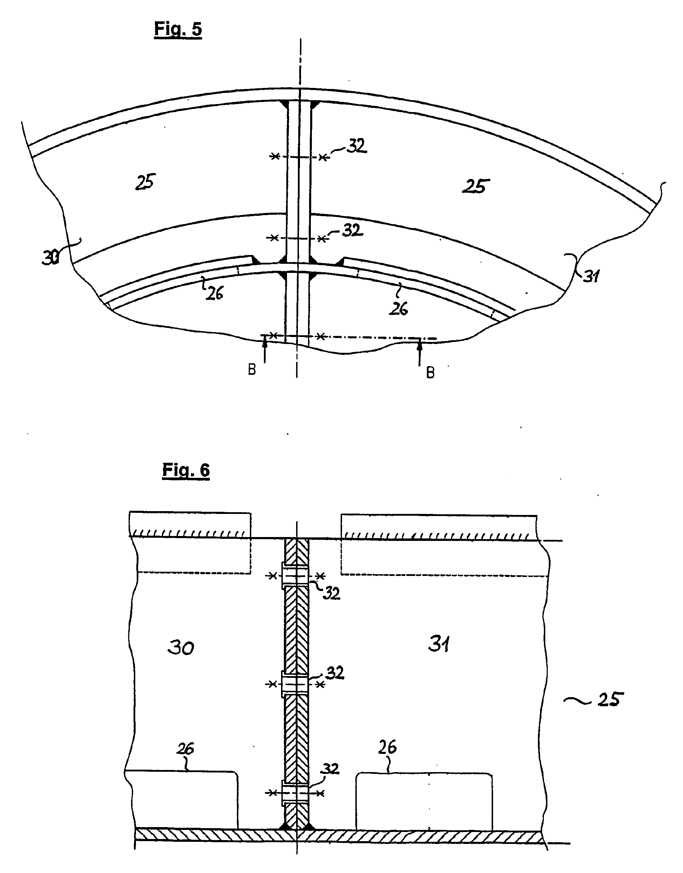

Fig. 5 und Fig. 6 zeigen die Möglichkeit der Segmentierung, in diesem Fall des Wanneneinlaufbereichs 25 mit den Öffnungen 26 und einem Teil der Verteilerwanne 20. Die beiden gezeigten Segmente 30 und 31 werden an den Verbindungsstellen 32 zusammengeschraubt. Fig. 5 zeigt dies in einer Ansicht von oben, während Fig. 6 eine Ansicht aus dem Innenraum in Richtung nach außen zeigt, wie es durch die Bezeichnung B-B in Fig. 5 dargestellt wird. Selbstverständlich lassen sich eine Vielzahl von Teilungen wählen, was sowohl für die Verteilerwanne 20 - wie gezeigt - gilt, als auch analog für den gelochten Vorverteiler 15 und den Feinverteiler 12 (hier nicht dargestellt).

Verteiler der oben beschriebenen Art lassen sich sehr vorteilhaft in Reaktoren zur Herstellung von Propylenoxid aus Propylen und Wasserstoffperoxid in der Flüssigphase einsetzen.

### Bezugszeichenliste

- 1: Einlauftülle
- 2: obere Öffnung
- 3: untere Öffnung
- 4: Absatz
- 5: Bohrung
- 6: Rohrboden
- 7: erste Flüssigkeit
- 8: Auslaufkegel
- 9: Schüttung
- 10: Rohr
- 11: zweite Flüssigkeit
- 12: Vorverteilerboden
- 13: gezackte Oberkante
- 14: Überlaufwehr
- 15: gelochter Feinverteiler
- 16: Flüssigkeitsschicht
- 17: Bohrungen
- 18: Gewinde
- 19: Dichtung
- 20: Verteilerwanne
- 21: Schraubenbolzen
- 22: Ringnut
- 23: Ringverteiler
- 24: Bohrungen
- 25: Wanneneinlaufbereich
- 26: Öffnungen
- 27: Flüssigkeitsanschluss
- 28: Austrittsschlitze
- 29: Bohrungen
- 30: Segment
- 31: Segment
- 32: Verbindungsstelle

## Patentansprüche

1. Rohrbündelreaktor umfassend einen Flüssigkeitsverteiler für 2 gleichmäßig in eine Vielzahl von Rohren des aufrecht stehenden Rohrbündelreaktors zu verteilende, flüssige Phasen zur Durchführung chemischer Reaktionen, wobei die Rohre ober- und unterseitig durch Rohrböden gehalten und gegenüber dem Rohraußenraum abgeschlossen sind und oberhalb des oberen Rohrbodens ein Verteilerraum angeordnet ist, der Zuführungen für zwei verschiedene Flüssigkeiten und mindestens eine Gasphase enthält, wobei
• direkt oberhalb des Rohrbodens oder darauf ein erstes Flüssigkeitsverteilungssystem (6, 20) angeordnet ist,
• welches mit mindestens einer äußeren Zuführungseinrichtung (23) verbunden ist und ein außerhalb des Rohrspiegels gelegenes Wehr (25) mit untenliegenden Öffnungen (26) und eine Vielzahl von Einlauftüllen (1) enthält,
• wobei jedem der Rohre des Rohrbündels eine Einlauftülle (1) oberseitig zugeordnet ist, die Einlauftüllen (1) rohrförmig ausgebildet und vertikal ausgerichtet sind und je mindestens eine seitliche (5) und eine weitere, oberhalb des Rohrbodens gelegene Öffnung(2) aufweisen sowie zum jeweils zugeordneten Rohr des Rohrbündels unterseitig hin (3) offen sind, und
• oberhalb des ersten Flüssigkeitsverteilungssystems (6, 20) ein zweites Flüssigkeitsverteilungssystem (12, 15) angeordnet ist,
• welches mit mindestens einer anderen äußeren Zuführungseinrichtung (27) verbunden ist und einen oberen (12) und einen unteren Verteilerboden (15) enthält,
• wobei der untere Verteilerboden (15) eine Vielzahl von Öffnungen (17) enthält, die fluchtend oberhalb der Einlauftüllen (1) des ersten Flüssigkeitsverteilungssystems (6, 20) angeordnet sind sowie mindestens eine Einrichtung zur Einstellung einer gleichmäßigen Flüssigkeitshöhe über den Öffnungen aufweist,
• wobei der obere Verteilerboden (12) mit der Zuführungseinrichtung (27) für Flüssigkeit verbunden ist und eine Vielzahl von Überlaufwehren (14) oder Bodenbohrungen (29) enthält, aus denen die Flüssigkeit in den unteren Verteilerboden (15) ablaufen kann und jedes der Überlaufwehre (14) einer Vielzahl von Öffnungen des unteren Verteilerbodens zugeordnet ist.

2. Rohrbündelreaktor gemäß Anspruch 1, **dadurch gekennzeichnet, dass** die Einlauftüllen (1) mindestens eine tiefer gelegene, kleinere seitliche Bohrung und mindestens eine höher gelegene, größere seitliche Bohrung aufweisen.

3. Rohrbündelreaktor gemäß Anspruch 1, **dadurch gekennzeichnet, dass** die Einlauftüllen mindestens eine seitliche Einkerbung aufweisen, durch welche Flüssigkeit vom Rohrboden in das Rohrinnere fließen kann.

4. Rohrbündelreaktor gemäß Anspruch 3, **dadurch gekennzeichnet, dass** in den Einkerbungen der Einlauftüllen drahtförmige Rinnhilfen angebracht werden, an denen die Flüssigkeit auf der Innenseite der Einlauftüllen herabrinnen kann.

5. Rohrbündelreaktor gemäß einem der vorangegangenen Ansprüche 1 bis 4, **dadurch gekennzeichnet, dass** das obere Flüssigkeitsverteilungssystem (15) auf den Einlauftüllen (1) des unteren Flüssigkeitsverteilungssystems aufliegt.

6. Rohrbündelreaktor gemäß einem der vorangegangenen Ansprüche 1 bis 5, **dadurch gekennzeichnet, dass** er zerlegbar und modular aufgebaut ist.

7. Rohrbündelreaktor gemäß Anspruch 6, **dadurch gekennzeichnet, dass** die einzelnen Teile steckbar sind.

8. Rohrbündelreaktor gemäß einem der vorangegangenen Ansprüche 1 bis 7, **dadurch gekennzeichnet, dass** die Überlaufwehre (14) des oberen Verteilerbodens (12) des zweiten Flüssigkeitsverteilungssystems an ihrer Oberkante oder Unterkante oder beiden eine gezackte Form (13) aufweisen.

9. Rohrbündelreaktor gemäß einem der vorangegangenen Ansprüche 1 bis 8, **dadurch gekennzeichnet, dass** der untere Verteilerboden mit Überlaufwehren oder Bodenbohrungen ausgestattet wird, die jeweils 3 um 120 Grad versetzte Abläufe aufweisen, welche jeweils fluchtend je einer Einlauftülle zugeordnet sind.

10. Rohrbündelreaktor gemäß einem der vorangegangenen Ansprüche 1 bis 9, **dadurch gekennzeichnet, dass** der untere Verteilerboden an seinen Öffnungen mit Ablaufhilfen versehen wird.

11. Rohrbündelreaktor gemäß Anspruch 1, **dadurch gekennzeichnet, dass** die Einlauftüllen mit dem Rohrboden und den Rohren formschlüssig verbunden sind.

12. Rohrbündelreaktor gemäß einem der vorangegangenen Ansprüche 1 oder 2, **dadurch gekennzeichnet, dass** die Einlauftüllen in die Rohrenden eingewalzt sind.

13. Verfahren zur Verteilung von 2 gleichmäßig zu verteilenden, flüssigen Phasen in eine vielzahl von Rohren eines aufrecht stehenden Rohrbündelreaktors nach einem der Ansprüche 1 bis 12, wobei es sich um 2 nicht miteinander mischbare Flüssigkeiten handelt, die wegen ihrer Nicht-Mischbarkeit nicht vorgemischt werden können,
**dadurch gekennzeichnet, dass**
die Flüssigkeiten getrennt voneinander in das erste und in das zweite Flüssigkeitsverteilungssystem und daraus in die einzelnen Rohre des Rohrbündels eingebracht werden.

14. Verfahren gemäß Anspruch 13.
**dadurch gekennzeichnet, dass**
außer den beiden Flüssigkeiten noch ein Gasstrom in die einzelnen Rohre des Rohrbündels geleitet wird.

## Claims

1. Tube-bundle reactor encompassing a liquid distributor for two liquid phases to be distributed uniformly to a plurality of tubes of an upright tube-bundle reactor for carrying out chemical reactions, wherein the tubes are retained at the top and bottom by tube-sheets and closed against the outside of the tube, and wherein a distribution chamber is arranged above the upper tube-sheet, which chamber contains feed pipes for two different liquids and at least one gas phase, featuring the following technical criteria:
• a first liquid distribution system (6, 20) is arranged above or fitted upon the said tube-sheet,
which system is connected to at least one outer feed device (23), and contains a weir (25), installed outside the tubed area, with openings (26) at the bottom and a plurality of inlet sleeves (1),
wherein one inlet sleeve (1) is assigned at the top to each of the tubes in the tube bundle, the inlet sleeves (1) are of tubular design and are vertically aligned, and the said sleeves have at least one lateral (5) and one further opening (2) located above the tube-sheet and are open at the bottom facing each assigned tube in the tube bundle (3), and
• a second liquid distribution system (12, 15) is arranged above the first liquid distribution system (6, 20),
which system is connected to at least one other outer feed device (27) and contains one upper and one lower distribution tray (15),
wherein the lower distribution tray (15) contains a plurality of openings (17) which are arranged flush above the inlet sleeves of the first liquid distribution system (6, 20), and exhibits at least one device for setting a uniform liquid level above the openings,
wherein the upper distribution tray (12) is connected to the feed device (27) for liquid, and contains a plurality of overflow weirs (14) or plate holes (29) from which the liquid is able to discharge into the lower distribution tray (15), and wherein each of the overflow weirs (14) is assigned to a plurality of openings in the lower distribution tray.

2. Tube-bundle reactor according to Claim 1, **characterised in that** the inlet sleeves (1) exhibit at least one lower, smaller lateral hole, and at least one higher, larger lateral hole.

3. Tube-bundle reactor according to Claim 1, **characterised in that** the inlet sleeves exhibit at least one lateral notch through which liquid is able to flow from the tube-sheet into the inside of the tube.

4. Tube-bundle reactor according to Claim 3, **characterised in that** wire-shaped flow aids are provided in the notches of the inlet sleeves, down which such aids the liquid is able to run on the inside of the inlet sleeves.

5. Tube-bundle reactor according to any one of preceding Claims 1 to 4, **characterised in that** the upper liquid distribution system (15) rests on the inlet sleeves (1) of the lower liquid distribution system.

6. Tube-bundle reactor according to any one of preceding Claims 1 to 5, **characterised in that** it is designed for disassembly and of modular structure.

7. Tube-bundle reactor according to Claim 6, **characterised in that** the individual member parts can be plugged into the respective other part..

8. Tube-bundle reactor according to any one of preceding Claims 1 to 7, **characterised in that** the overflow weirs (14) of the upper distribution tray (12) of the second liquid distribution system exhibit a serrated shape (13) on its upper edge or lower edge, or both.

9. Tube-bundle reactor according to any one of preceding Claims 1 to 8, **characterised in that** the lower distribution tray is provided with overflow weirs or plate holes, each of which exhibit three outlets offset by 120 degrees, which outlets are each assigned flush to an inlet sleeve.

10. Tube-bundle reactor according to any one of preceding Claims 1 to 9, **characterised in that** the lower distribution tray is provided with discharge flow aids at its openings.

11. Tube-bundle reactor according to Claim 1, **characterised in that** the inlet sleeves are positively connected to the tube-sheet and the tubes.

12. Tube-bundle reactor according to any one of preceding Claims 1 or 2, **characterised in that** the inlet sleeves are rolled into the tube ends.

13. Process for a uniform distribution of two liquid phases to a plurality of tubes of a vertical tube-bundle reactor in accordance with any one of the preceding Claims 1 to 12, the said phases being inadequate for a mixture because of their incompatibility of pre-mixture,
**characterised in that** the liquids are separately fed to the first and a second liquid distribution systems, from which the liquids can flow into the individual tubes of the tube bundle.

14. Process in accordance with Claim 13, **characterised in that** apart from the two said liquids, a gas stream is additionally fed to the individual tubes of the tube bundle.

## Revendications

1. Réacteur à faisceau tubulaire qui englobe un dispositif distributeur de liquide pour deux phases liquides à envoyer, à un rapport égal, vers une multitude de tubes du réacteur à faisceau tubulaire disposé verticalement et destiné à un régime de réactions chimiques, les dits tubes étant fixés aux extrémités supérieure et inférieure par des plaques tubulaires et fermés vers le côté extérieur du tubage, avec une chambre de distribution disposée au-dessus de la plaque supérieure et munie de tubes d'amenée pour deux phases liquides différentes et au minimum une phase gazeuse ; les caractéristiques technologiques du réacteur sont décrites ci-après :
• Le premier système distributeur de liquide (6, 20) est disposé au-dessus de ou sur la plaque tubulaire,
le dit système étant branché sur un dispositif d'amenée extérieur (23) et doté d'un déversoir (25) monté hors du secteur de tubage, avec des trous (26) au fond et une multitude de douilles d'entrée (1) ;
une douille d'entrée (1) est disposée à la tête de chaque tube du faisceau et les dites douilles ont une forme tubulaire et se trouvent accostés verticalement, les dites douilles (1) ont au moins un trou latéral (5) et un autre trou (2) disposé au-dessus du faisceau tubulaire et ils sont ouverts à l'extrémité inférieure vers le tube respectif du tube de la plaque tubulaire (3) ;
• Le deuxième système distributeur de liquide (12, 15) est disposé au-dessus du premier système distributeur (6, 20),
le dit système étant connecté avec un autre dispositif d'amenée extérieur (27) et doté de cuvettes de distribution supérieure et inférieure (15) ;
dont la cuvette de distribution inférieure (15) englobe une multitude de trous (17) disposés à un même niveau au-dessus des douilles d'entrée (1) du premier système distributeur de liquide (6, 20) et elle a au moins un dispositif de réglage pour ajuster un niveau uniforme de liquide au-dessus des dits trous;
dont la cuvette de distribution supérieure (12) est connectée au dispositif d'amenée (27) pour des liquides et englobe une multitude de déversoirs (14) ou de trous (29), de manière que le liquide puisse s'écouler dans la cuvette de distribution (15), chacun des déversoirs (14) ayant une multitude de trous orientés vers la cuvette de distribution inférieure.

2. Réacteur à faisceau tubulaire selon la Revendication No. 1,
**caractérisé en ce que** les douilles d'entrée (1) sont munies au moins d'un trou latéral petit disposé plus bas et d'un trou latéral grand disposé plus haut.

3. Réacteur à faisceau tubulaire selon la Revendication No. 1,
**caractérisé en ce que** les douilles d'entrée ont au moins une entaille latérale permettant l'écoulement du liquide depuis la plaque tubulaire vers l'intérieur du tube.

4. Réacteur à faisceau tubulaire selon la Revendication No. 3,
**caractérisé en ce que** les entailles des douilles d'entrée sont munies d'aides d'écoulement pour que le liquide puisse s'écouler à l'intérieur de la douille d'entrée respective.

5. Réacteur à faisceau tubulaire selon l'une des Revendications Nos. 1 à 4,
**caractérisé en ce que** le système distributeur de liquide supérieur (15) s'appuie sur les douilles d'entrée (1) du système distributeur de liquide inférieur.

6. Réacteur à faisceau tubulaire selon l'une des Revendications Nos. 1 à 5,
**caractérisé en ce que** le dit dispositif est démontable et d'une structure modulaire.

7. Réacteur à faisceau tubulaire selon la Revendication No. 6,
**caractérisé en ce que** les éléments individuels sont de nature enfichable mâle / femelle.

8. Réacteur à faisceau tubulaire selon l'une des Revendications Nos. 1 à 7,
**caractérisé en ce que** les déversoirs (14) de la cuvette de distribution supérieure (12), du deuxième système distributeur de liquide, ont une surface dentelée (13) aux coins supérieur ou inférieur ou à tous les deux.

9. Réacteur à faisceau tubulaire selon l'une des Revendications Nos. 1 à 8,
**caractérisé en ce que** la cuvette de distribution inférieure est dotée de déversoirs ou de trous de fond, dont chacun est muni de trois sorties décalées de 120 degrés, chacune des dites sorties s'alignant avec une douille d'entrée.

10. Réacteur à faisceau tubulaire selon l'une des Revendications Nos. 1 à 9.
**caractérisé en ce que** la cuvette de distribution inférieure a des trous munis d'aides d'écoulement.

11. Réacteur à faisceau tubulaire selon la Revendication No. 1,
**caractérisé en ce que** les douilles d'entrée sont montées solidaires avec la plaque tubulaire et les tubes.

12. Réacteur à faisceau tubulaire selon l'une des Revendications Nos. 1 ou 2,
**caractérisé en ce que** les douilles d'entrée sont mandrinées dans les extrémités des tubes.

13. Procédé pour la distribution équivalente de deux phases liquides à envoyer à un rapport égal, à une multitude de tubes d'un réacteur vertical à faisceau tubulaire, selon l'une des Revendications Nos. 1 à 12, les dites phases liquides ne pouvant pas être mélangées par suite de leur incompatibilité de pré-mélange,
**caractérisé en ce que** les dits liquides doivent être envoyés séparément vers un premier système distributeur de liquide et en même temps vers un deuxième pareil système distributeur, pour que les liquides s'écoulent ensuite dans les tubes individuels du faisceau tubulaire.

14. Procédé selon la Revendication No. 13,
**caractérisé en ce que** un courant de gaz est introduit également dans chaque tube du faisceau tubulaire, en plus des dites phases liquides.
